# EUROPÄISCHE PATENTSCHRIFT

(11) **EP 3 245 420 B1**
(45) Veröffentlichungstag und Bekanntmachung des Hinweises auf die Patenterteilung: **29.01.2020**
(21) Anmeldenummer: 15816715.5
(22) Anmeldetag: 15.12.2015
(51) Int. Cl.: F16F 9/46

(54) **VERSTELLBARE DÄMPFVENTILEINRICHTUNG**
ADJUSTABLE DAMPING DEVICE
DISPOSITIF DE VANNE D'AMORTISSEMENT RÉGLABLE

(30) Priorität: 13.01.2015 DE 102015200348
(43) Veröffentlichungstag der Anmeldung: 22.11.2017
(73) Patentinhaber: ZF Friedrichshafen AG, 88046 Friedrichshafen (DE)
(72) Erfinder: MANGER, Thomas, 97535 Wasserlosen (DE); RUHMANN, Lukas, 91350 Gremsdorf (DE); SCHMITT, Stefan, 97469 Gochsheim (DE)
(86) Internationale Anmeldenummer: PCT/EP2015/079697
(87) Internationale Veröffentlichungsnummer: WO 2016/113056

(56) Entgegenhaltungen:
- EP-A1- 0 561 404
- EP-A2- 2 546 542
- DE-B3-102012 210 460

## Beschreibung

Die Erfindung betrifft eine verstellbare Dämpfventileinrichtung gemäß dem Oberbegriff von Patentanspruch 1.

Aus der DE 10 2012 210 460 B3 ist eine verstellbare Dämpfventileinrichtung bekannt, die ein Vorstufenventil und ein Hauptstufenventil umfasst. Des Weiteren ist in Reihe zum Vorstufenventil ein Notbetriebsventil geschaltet, das bei einem Ausfall der Energieversorgung für einen Aktuator der Dämpfventileinrichtung eine Notbetriebsstellung einnimmt. Dem Notbetriebsventil ist wiederum mindestens ein Überdruckventil parallel geschaltet, das bei einem Überdruck in einem Steuerraum der Dämpfventileinrichtung öffnet und damit eine maximale Dämpfkrafteinstellung bestimmt. Damit umfasst die Dämpfventileinrichtung mindestens vier Einzelventile, die aufeinander abgestimmt werden müssen und die einen erheblichen Fertigungsaufwand bedingen.

Das Notbetriebsventil umfasst einen ringförmigen Notbetriebsventilkörper, der von einer Notbetriebsventilfeder auf eine bezogen auf das Vorstufenventil separate Ventilsitzfläche vorgespannt wird.

Die DE 10 2010 063 386 B4 offenbart eine Alternativlösung. Das mindestens eine Überdruckventil ist ebenfalls in dem Notbetriebsventil angeordnet. Man kann dafür bezogen auf den notwendigen Bauraum kleine Überdruckventile vorsehen, die man z. B. in das Notbetriebsventil einschraubt. Derartige Überdruckventile stehen als Baueinheit zur Verfügung und sind vergleichsweise kostengünstig. Allerdings sind sie wegen der kleinen Bauform vergleichsweise empfindlich hinsichtlich der Fertigungstoleranzen z. B. bei der Schließfeder. Dieses Problem kann man zwar mit einer verstellbaren Abstützfläche für die Schließfeder kompensieren, doch sind die realisierbaren Volumenströme durch ein einziges Überdruckventil vergleichsweise gering. Folglich sind mehrere Überdruckventile vorzusehen, wodurch der Montageaufwand wächst.

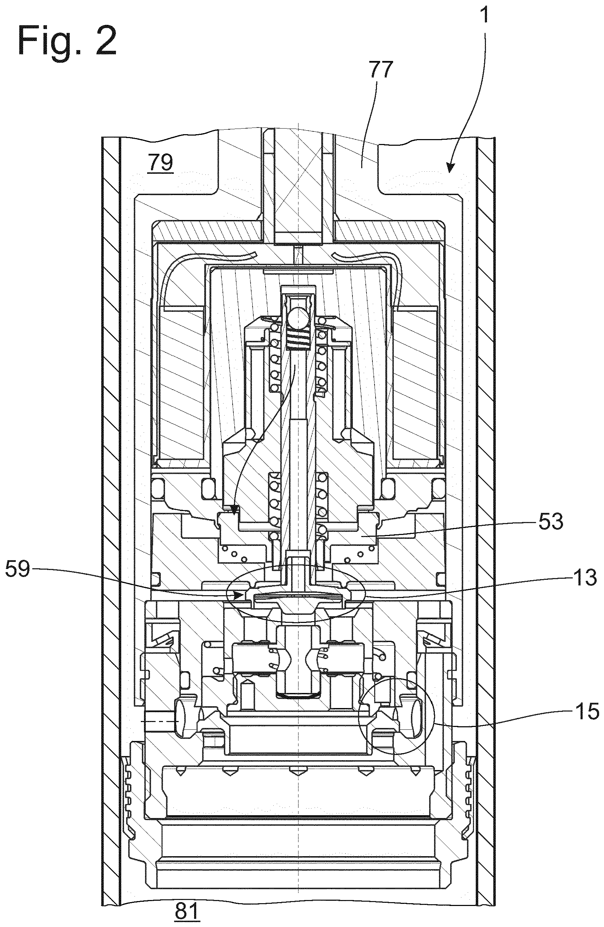

Die EP 0561 404 A1 beschreibt eine gattungsbildende Dämpfventileinrichtung mit einem Hauptstufenventil, einem Vorstufenventil und einem Notbetriebsventil. In der Ausführung nach Fig. 2 verfügt das Notbetriebsventil über eine zum Vorstufenventil separate Ventilsitzfläche. Eine Notbetriebsventilfeder übt keine Betriebskraft auf den Vorstufenventilkörper aus. Das Vorstufenventil und das Notbetriebsventil sind in dieser Ausführung hydraulisch in Reihe angeordnet. Wenn man bei einem intakten Vorstufenventil bzw. einer funktionierenden Stromversorgung den Notbetriebsventilkörper entfernen würde, dann hätte diese Situation keinen Einfluss auf das Verhalten des Vorstufenventils, sodass funktional zwei getrennte Ventile vorliegen.

In der Ausführung nach Fig. 6 liegt eine ähnliche Bauform vor. Der Notbetriebsventilkörper stützt sich zwar auf dem Vorstufenventilkörper ab, jedoch liegen zweifellos zwei getrennte Ventile vor, die hydraulisch parallel geschaltet sind.

Die Aufgabe der vorliegenden Erfindung besteht darin, eine verstellbare Dämpfventileinrichtung mit einer Notbetriebsfunktion bereitzustellen, das einen im Vergleich zum Stand der Technik einfacheren Gesamtaufbau aufweist.

Die Aufgabe der Erfindung wird durch die Merkmale des Patentanspruchs 1 gelöst.

Der Vorteil besteht darin, dass durch die Doppelfunktion Vorstufenventil-Notbetriebsventil zwei Ventile, nämlich das bisherige Notbetriebsventil und mindestens ein Überdruckventil entfallen können.

Neben dem baulichen Aufwand lässt sich auch ein axialer Bauraumvorteil erzielen.

Um eventuelle Fertigungsungenauigkeiten zu minimieren, stützt sich der Notbetriebsanker randseitig auf einer Deckfläche des Vorstufenventilkörpers ab. Je größer der Berührkreis zwischen Notbetriebsanker und dem Vorstufenventilkörper ist, umso geringer wirken sich maßliche Fehler aus.

In weiterer vorteilhafter Ausgestaltung weist die Deckfläche ein Stufenprofil mit einer abgesetzten Kontaktfläche für den Notbetriebsanker auf. Durch diese Geometrie reduziert sich der Bearbeitungsaufwand, da nur ein kleiner Flächenanteil präzise hergestellt werden muss.

Alternativ oder in Kombination kann der Notbetriebsanker in Richtung der Deckfläche des Vorstufenventilkörpers eine abgesetzte Aufsitzfläche aufweisen.

Bevorzugt weist die Aufsitzfläche eine Schneidengeometrie aufweist. Die Schneidengeometrie bezweckt eine Linienberührung zwischen dem Notbetriebsanker und dem Vorstufenventilkörper, so dass ein Winkelfehler zwischen dem Notbetriebsanker und dem Vorstufenventilkörper leicht kompensiert werden kann

Um die Bewegungsfähigkeit des Notbetriebsankers zu fördern, weist dieser eine Strömungsverbindung auf, die zwei durch den Notbetriebsanker voneinander getrennte Räume der Dämpfventileinrichtung miteinander verbindet. Damit können sich keine hydraulisch abgeschlossenen Räume bilden, die einen Unterdruck- oder einen Staudruck verursachen könnten.

Beispielhaft kann der Notbetriebsanker im Bereich der Aufsitzfläche mindestens einen Stichkanal aufweisen. Der Notbetriebsanker wird dadurch in seiner Festigkeit nicht geschwächt.

Alternativ kann der Notbetriebsanker an seiner äußeren Mantelfläche die mindestens eine Strömungsverbindung aufweisen.

Anhand der folgenden Figurenbeschreibung soll die Erfindung näher erläutert werden.

Es zeigt:
Fig. 1 Schnitt durch eine Dämpfventileinrichtung
Fig. 2 Dämpfventileinrichtung an einer Kolbenstange

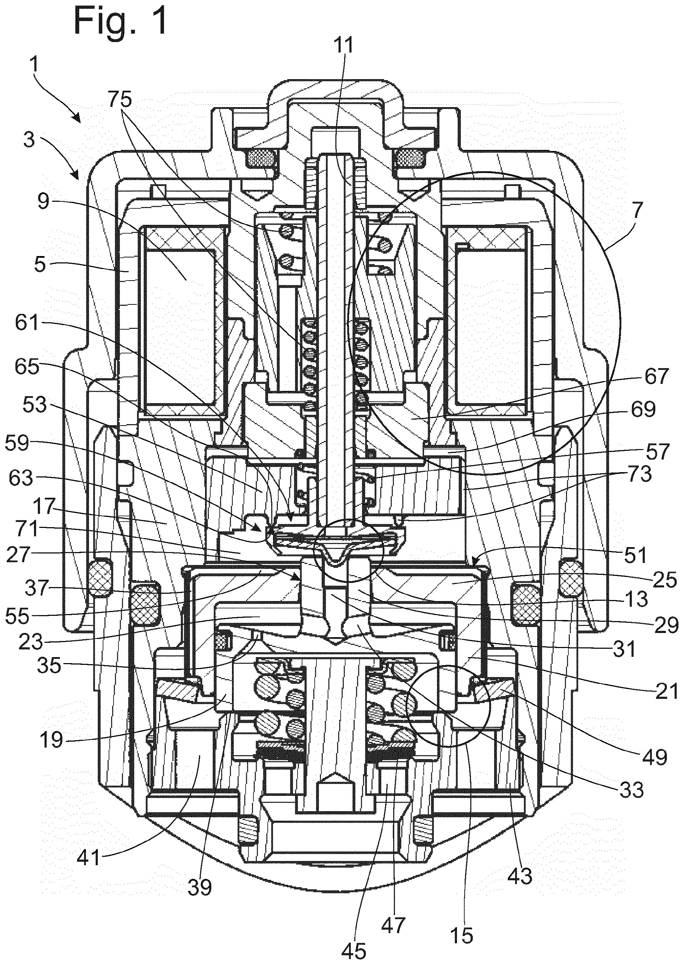

Die Figur 1 zeigt eine Dämpfventileinrichtung 1 mit einem axial zweigeteilten Dämpfventilgehäuse 3 für einen Schwingungsdämpfer beliebiger Bauform. In der vorliegenden Ausgestaltung ist die Dämpfventileinrichtung 1 für eine bezogen auf einen äußeren Zylinder des Schwingungsdämpfers externe Anordnung vorgesehen, doch kann das Bauprinzip leicht auf eine Dämpfventileinrichtung z. B. an einer Kolbenstange adaptiert werden. In einem ersten Dämpfventilgehäuseabschnitt 5 ist ein an sich bekannter Aktuator 7 angeordnet, der eine Spule 9 umfasst, die über einen Anker 11 auf ein Vorstufenventil 13 einwirkt. Mit dem Vorstufenventil 13 wird ein Hauptstufenventil 15 angesteuert, das die Dämpfkraft im Schwingungsdämpfer erzeugt. Das Vorstufen- und das Hauptstufenventil 13; 15 sind in zweiten Dämpfventilgehäuseabschnitt 17 angeordnet, das eine Rohrgrundform ohne eine Zwischenwandung aufweist.

Das Hauptstufenventil 15 umfasst einen Hauptstufenventilkörper 19, der axial beweglich in einem zum Dämpfventilgehäuse 3 separaten Gehäuseeinsatz 21 geführt ist. Der Gehäuseeinsatz 21 ist topfförmig ausgeführt und bildet einen Steuerraum 23, über den das Hauptstufenventil 15 von dem Vorstufenventil 13 angesteuert wird. Ein Boden 25 des Gehäuseeinsatzes 21 verfügt über eine Öffnung 27, in der ein Führungsschaft 29 des Hauptstufenventilkörpers 19 geführt ist. In dem Führungsschaft 29 verlaufen ein Axialkanal 31 und ein Querkanal 33, die den Steuerraum 23 über einen Durchlass 35 in dem Boden 25 mit dem Vorstufenventil 13 verbinden.

Der Gehäuseeinsatz 21 weist außenseitig eine Profilierung auf. Dadurch bilden einander zugewandten Flächen des Dämpfventilgehäuses 3 und des Gehäuseeinsatzes 21 mindestens einen Strömungskanal 37 für einen Dämpfmediumstrom innerhalb der Dämpfventileinrichtung 1 und außenseitig verfügt der Boden 25 über Radialkanäle 55, die in die Strömungskanäle 37 übergehen.

Das Hauptstufenventil 15 ist als ein Sitzventil ausgeführt, so dass der Hauptstufenventilkörper 19 auf einer Hauptstufenventilsitzfläche 39 aufliegt. Radial außerhalb der Hauptstufenventilsitzfläche 39 ist mindestens ein Durchlasskanal 41 ausgeführt, der radial innerhalb des Dämpfventilgehäuses 3 angeordnet ist. Der außenseitig am Gehäuseeinsatz 21 vorliegende Strömungskanal 37 ist an den mindestens einen Durchlasskanal 41 angeschlossen.

Die Hauptstufenventilsitzfläche 39 wird wiederum von einem Ventileinsatz 43 gebildet, über den der Gehäuseeinsatz 21 im Dämpfventilgehäuse 3 axial positioniert wird. In der vorliegenden Ausführungsform verfügt der Ventileinsatz 43 über Dämpfkanäle 45, die mit mindestens einer Ventilscheibe 47 zusammenwirken. Es handelt sich dabei aber um eine Option.

Der Gehäuseeinsatz 21 wird von einem Federelement 49 in der Bauform einer Scheibenfeder axial gegen eine Stützfläche 51 des Dämpfventilgehäuses 3 vorgespannt. Das Federelement 49 stützt sich wiederum an dem Ventileinsatz 43 ab.

Grundsätzlich wäre eine Dämpfventileinrichtung 1 mit einem Hauptstufenventil 15 und einem Vorstufenventil 13 funktionsfähig. Insbesondere für den Fall, dass der Aktuator 7 nicht mehr mit Energie versorgt werden kann, verfügt diese verstellbare Dämpfventileinrichtung 1 über eine Notbetriebsfunktion.

Innerhalb des zweiten Dämpfventilgehäuseabschnitts 17 ist ein Notbetriebsanker 53 axial beweglich geführt. Eine Notbetriebsfeder 57 in der Bauform einer Druckfeder spannt den Notbetriebsanker 53 auf den Vorstufenventilkörper 59 des Vorstufenventils 13 vor. Die Notbetriebsfeder 57 stützt sich an einem gehäusefesten Bauteil ab und der Notbetriebsanker 53 liegt mit direktem Kontakt randseitig auf einer Deckfläche 61 des Vorstufenventilkörpers 59.

Die Deckfläche 61 weist ein Stufenprofil mit einer abgesetzten Kontaktfläche 63 für den Notbetriebsanker 53 auf. Auch der Notbetriebsanker 53 verfügt in Richtung der Deckfläche 61 des Vorstufenventilkörpers 59 über eine abgesetzte Aufsitzfläche 65, wobei die Aufsitzfläche 65 bevorzugt eine Schneidengeometrie aufweist.

Der Notbetriebsanker 53 ist räumlich zwischen einem Rückschlusskörper 67 des Aktuators 7 und dem Boden 25 des Gehäuseeinsatzes 21 angeordnet und trennt damit zwei Hubräume 69; 71 für den Notbetriebsanker. Um keinen Staudruck in einem der Hubräume 69; 71 aufbauen zu lassen, verfügt der Notbetriebsanker 53 über mindestens eine Strömungsverbindung 73, die die beiden voneinander getrennten Räume 69; 71 der Dämpfventileinrichtung 1 miteinander verbindet.

Eine Strömungsverbindung 73 kann optional im Bereich der Aufsitzfläche 65 als Stichkanal ausgeführt sein, z. B. in der Form einer einfachen Prägung. Alternativ kann der Notbetriebsanker an seiner äußeren Mantelfläche die Strömungsverbindung 73 aufweisen.

In der linken Schnitthälfte ist der Notbetriebsanker in der axialen Baulänge dargestellt, vergleichbar mit dem Stand der Technik. Die rechte Schnitthälfte verdeutlicht den mit der Erfindung erreichbaren Bauraumvorteil infolge eines schmalen Notbetriebsankers 53.

Bei einer Arbeitsbewegung eines mit der Dämpfventileinrichtung versehenen Schwingungsdämpfers wird Dämpfmedium über einen Rohranschluss des Ventileinsatzes 43 in die Dämpfventileinrichtung 3 verdrängt. Das Dämpfmedium passiert dabei den mindestens einen Dämpfkanal 45 und die mindestens eine Ventilscheibe 47. Dadurch wirkt eine Abhubkraft auf den Hauptstufenventilkörper 19. Das Dämpfmedium gelangt über den Durchlass 35 in den Steuerraum 23 und übt damit auf den Hauptstufenventilkörper 19 eine Schließkraft aus. Das Vorstufenventil 13 steuert einen Abflussquerschnitt aus dem Steuerraum 23 in den Strömungskanal 37 zwischen dem Gehäuseeinsatz 21 und dem zweiten Dämpfventilgehäuseabschnitt 17. Bei intakter Energieversorgung wird der Notbetriebsanker 53 gegen die Kraft der Notbetriebsfeder 57 angehoben und damit wird der Vorstufenventilkörper 59 entlastet. Die auf den Vorstufenventilkörper 59 einwirkende Schließkraft wird dann nur noch von einer Federanordnung 75 des Aktuators 7 bestimmt, die auf den Anker 11 des Vorstufenventils 13 wirkt. Die Federanordnung 75 des Ankers 11 und die Notbetriebsfeder 57 sind funktional parallel geschaltet.

Das abfließende Dämpfmedium erreicht über die Radialkanäle 55 und den Strömungskanal 37 einen Ringraum zwischen dem zweiten Dämpfventilgehäuseabschnitt 17 und dem Ventileisatz 43, über dessen mindestens einen Durchlasskanal 41 das Dämpfmedium des Vorstufenventils 13 abfließt.

Sofern die Energieversorgung für den Aktuator 7 gestört ist, wirkt die gesamte Schließkraft der Notbetriebsfeder 57 über den Kontakt zwischen dem Notbetriebsanker 53 und dem Vorstufenventilkörper 59. In Summe bestimmen die Federkräfte der Federanordnung 75 und der Notbetriebsfeder 57 die auf den Vorstufenventilkörper 59 wirkende Schließkraft.

Der Druck im Axialkanal 31 wirkt in Öffnungsrichtung und lässt den Vorstufenventilkörper 59 abheben. Dabei baut sich im Steuerraum 23 ein Schließdruck auf den Hauptstufenventilkörper 19 auf. Folglich übernimmt das Vorstufenventil 13 auch bei Ausfall der Stromversorgung für den Aktuator 7 die Notbetriebsfunktion.

Bei einer Abhubbewegung des Hauptstufenventilkörpers 19 von seiner Hauptstufenventilsitzfläche 39 strömt Dämpfmedium nach radial außen und fließt ebenfalls über den mindestens einen Durchlasskanal 41 aus dem Dämpfventilgehäuse 3 ab.

Das Dämpfmedium fließt dann in einen nicht dargestellten Ausgleichs- oder Arbeitsraum.

Die Erfindung ist nicht auf die Anwendung in einem Dämpfventil mit einseitiger Durchströmungsrichtung beschränkt. Die Figur 2 zeigt eine Ausführungsform einer verstellbaren Dämpfventileinrichtung 1 an einer Kolbenstange 77 zwischen zwei mit Dämpfmedium gefüllten Arbeitsräumen 79; 81. Der Aufbau des Vorstufenventils 13 und des Hauptstufenventils 15 sind im Detail aus der DE 10 2012 210 460 B3 bekannt. Abweichend wird ein Notbetriebsanker 53 gemäß der Figur 1 verwendet, das sich ebenfalls direkt auf dem Vorstufenventilkörper 59 abstützt, er baugleich ist mit der Ausführung nach Fig. 1. Auch in dieser Ausführung übernimmt das Vorstufenventil 13 die Funktion eines Notbetriebsventils.

**Bezugszeichen**

| | | | |
|---|---|---|---|
| 1 | Dämpfventileinrichtung | 61 | Deckfläche |
| 3 | Dämpfventilgehäuse | 63 | Kontaktfläche |
| 5 | erster Dämpfventilgehäuseabschnitt | 65 | Aufsitzfläche |
| 7 | Aktuator | 67 | Rückschlusskörper |
| 9 | Spule | 69 | Hubräume |
| 11 | Anker | 71 | Hubräume |
| 13 | Vorstufenventil | 73 | Strömungsverbindung |
| 15 | Hauptstufenventil | 75 | Federanordnung |
| 17 | zweiter Dämpfventilgehäuseabschnitt | 77 | Kolbenstange |
| 19 | Hauptstufenventilkörper | 79 | Arbeitsraum |
| 21 | Gehäuseeinsatz | 81 | Arbeitsraum |
| 23 | Steuerraum | | |
| 25 | Boden | | |
| 27 | Öffnung | | |
| 29 | Führungsschaft | | |
| 31 | Axialkanal | | |
| 33 | Querkanal | | |
| 35 | Durchlass | | |
| 37 | Strömungskanal | | |
| 39 | Hauptstufenventilsitzfläche | | |
| 41 | Durchlasskanal | | |
| 43 | Ventileinsatz | | |
| 45 | Dämpfkanäle | | |
| 47 | Ventilscheibe | | |
| 49 | Federelement | | |
| 51 | Stützfläche | | |
| 53 | Notbetriebsanker | | |
| 55 | Radialkanäle | | |
| 57 | Notbetriebsfeder | | |
| 59 | Vorstufenventilkörper | | |

## Patentansprüche

1. Verstellbare Dämpfventileinrichtung (1) für einen Schwingungsdämpfer, umfassend ein Hauptstufenventil (15), das von einem mittels eines elektromagnetischen Aktuators (7) betätigbaren Vorstufenventils (13) mit einem Vorstufenventilkörper (59) angesteuert wird, wobei auf einen Anker (11) des Vorstufenventilkörper (59) eine von einer Federanordnung (75) des Aktuators (7) erzeugte Schließkraft wirkt, wobei im Notbetrieb ein Notbetriebsventil das Hauptstufenventil (15) ansteuert, **dadurch gekennzeichnet, dass** ein Notbetriebsanker (53) von einer Notbetriebsfeder (57) auf den Vorstufenventilkörper (59) des Vorstufenventils (13) vorgespannt wird, so dass das Vorstufenventil (13) das Notbetriebsventil bildet
wobei die Federanordnung (75) und die Notbetriebsfeder (57) funktional parallel geschaltet sind,
und sich die Notbetriebsfeder (57) als Druckfeder an einem gehäusefesten Bauteil abstützt, wobei im Notbetrieb die Schließkraft auf den Vorstufenstufenventilkörper (59) in Summe von den Federkräften der Federanordnung (75) und der Notbetriebsfeder (57) bestimmt wird.

2. Verstellbare Dämpfventileinrichtung nach Anspruch 1, **dadurch gekennzeichnet, dass** sich der Notbetriebsanker (53) randseitig auf einer Deckfläche (61) des Vorstufenventilkörpers (59) abstützt.

3. Verstellbare Dämpfventileinrichtung nach Anspruch 2, **dadurch gekennzeichnet, dass** die Deckfläche (61) ein Stufenprofil mit einer abgesetzten Kontaktfläche (63) für den Notbetriebsanker (53) aufweist.

4. Verstellbare Dämpfventileinrichtung nach Anspruch 2, **dadurch gekennzeichnet, dass** der Notbetriebsanker (53) in Richtung der Deckfläche (61) des Vorstufenventilkörpers (59) eine abgesetzte Aufsitzfläche (65) aufweist.

5. Verstellbare Dämpfventileinrichtung nach Anspruch 4, **dadurch gekennzeichnet, dass** die Aufsitzfläche (65) eine Schneidengeometrie aufweist.

6. Verstellbare Dämpfventileinrichtung nach einem der Ansprüche 1 - 5, **dadurch gekennzeichnet, dass** der Notbetriebsanker (53) eine Strömungsverbindung (73) aufweist, die zwei durch den Notbetriebsanker (53) voneinander getrennte Räume (69; 71) der Dämpfventileinrichtung (1) miteinander verbindet.

7. Verstellbare Dämpfventileinrichtung nach Anspruch 6, **dadurch gekennzeichnet, dass** der Notbetriebsventilanker (53) im Bereich der Aufsitzfläche (65) mindestens einen Stichkanal (73) aufweist.

8. Verstellbare Dämpfventileinrichtung nach Anspruch 6, **dadurch gekennzeichnet, dass** Notbetriebsventilanker (53) an seiner äußeren Mantelfläche die mindestens eine Strömungsverbindung (73) aufweist.

## Claims

1. Adjustable damping valve device (1) for a vibration damper, comprising a main stage valve (15) which is controlled by a pilot stage valve (13), which pilot stage valve is actuatable by means of an electromagnetic actuator (7) and has a pilot stage valve body (59), wherein a closing force generated by a spring arrangement (75) of the actuator (7) acts on an armature (11) of the pilot stage valve body (59), wherein, in emergency operation, an emergency operation valve controls the main stage valve (15), **characterized in that** an emergency operation armature (53) is preloaded by an emergency operation spring (57) against the pilot stage valve body (59) of the pilot stage valve (13), such that the pilot stage valve (13) forms the emergency operation valve, wherein the spring arrangement (75) and the emergency operation spring (57) are connected functionally in parallel,
and the emergency operation spring (57), as a compression spring, is supported on a component fixed with respect to a housing, wherein, in emergency operation, the closing force on the pilot stage valve body (59) is determined collectively by the spring forces of the spring arrangement (75) and of the emergency operation spring (57).

2. Adjustable damping valve device according to Claim 1, **characterized in that** the emergency operation armature (53) is supported on an edge of a top surface (61) of the pilot stage valve body (59).

3. Adjustable damping valve device according to Claim 2, **characterized in that** the top surface (61) has a stepped profile with an offset contact surface (63) for the emergency operation armature (53).

4. Adjustable damping valve device according to Claim 2, **characterized in that** the emergency operation armature (53) has an offset setting-down surface (65) in the direction of the top surface (61) of the pilot stage valve body (59).

5. Adjustable damping valve device according to Claim 4, **characterized in that** the setting-down surface (65) has a cutting edge geometry.

6. Adjustable damping valve device according to any of Claims 1 - 5, **characterized in that** the emergency operation armature (53) has a flow connection (73) which connects two chambers (69; 71), which are separated from one another by the emergency operation armature (53), of the damping valve device (1) to one another.

7. Adjustable damping valve device according to Claim 6, **characterized in that** the emergency operation valve armature (53) has at least one branch channel (73) in the region of the setting-down surface (65).

8. Adjustable damping valve device according to Claim 6, **characterized in that** emergency operation valve armature (53) has the at least one flow connection (73) on its outer lateral surface.

## Revendications

1. Dispositif de vanne d'amortissement réglable (1) pour un amortisseur de vibrations, comprenant une vanne à étage principale (15) qui est commandée par une vanne à étage d'amont (13) avec un corps de vanne à étage d'amont (59) pouvant être actionnée par un actionneur électromagnétique (7), dans lequel une force de fermeture produite par un agencement de ressort (75) de l'actionneur (7) agit sur un noyau d'induit (11) du corps de vanne à étage d'amont (59), dans lequel en fonctionnement d'urgence, une vanne de fonctionnement d'urgence commande la vanne à étage principale (15), **caractérisé en ce qu'**un noyau d'induit de fonctionnement d'urgence (53) est précontraint sur le corps de vanne à étage d'amont (59) de la vanne à étage d'amont (13) par un ressort de fonctionnement d'urgence (57), de sorte que la vanne à étage d'amont (13) forme la vanne de fonctionnement d'urgence,
dans lequel l'agencement de ressort (75) et le ressort de fonctionnement d'urgence (57) sont montés en parallèle de manière fonctionnelle,
et le ressort de fonctionnement d'urgence (57) s'appuie en tant que ressort de pression contre une pièce fixée au boîtier, dans lequel en fonctionnement d'urgence, la force de fermeture sur le corps de vanne à étage d'amont (59) est déterminée à la somme des tensions de ressort de l'agencement de ressort (75) et du ressort de fonctionnement d'urgence (57).

2. Dispositif de vanne d'amortissement réglable selon la revendication 1, **caractérisé en ce que** le noyau d'induit de fonctionnement d'urgence (53) s'appuie au niveau du bord sur une surface de recouvrement (61) du corps de vanne à étage d'amont (59).

3. Dispositif de vanne d'amortissement réglable selon la revendication 2, **caractérisé en ce que** la surface de recouvrement (61) présente un profil étagé avec une surface de contact (63) étagée pour le noyau d'induit de fonctionnement d'urgence (53).

4. Dispositif de vanne d'amortissement réglable selon la revendication 2, **caractérisé en ce que** le noyau d'induit de fonctionnement d'urgence (53) présente une surface de siège (65) étagée en direction de la surface de recouvrement (61) du corps de vanne à étage d'amont (59).

5. Dispositif de vanne d'amortissement réglable selon la revendication 4, **caractérisé en ce que** la surface de siège (65) présente une géométrie de coupe.

6. Dispositif de vanne d'amortissement réglable selon l'une des revendications 1 - 5, **caractérisé en ce que** le noyau d'induit de fonctionnement d'urgence (53) présente une liaison d'écoulement (73) qui relie entre eux deux espaces (69; 71) du dispositif de vanne d'amortissement (1) séparés l'un de l'autre par le noyau d'induit de fonctionnement d'urgence (53).

7. Dispositif de vanne d'amortissement réglable selon la revendication 6, **caractérisé en ce que** le noyau d'induit de vanne de fonctionnement d'urgence (53) présente au moins un canal de raccordement (73) au niveau de la surface de siège (65).

8. Dispositif de vanne d'amortissement réglable selon la revendication 6, **caractérisé en ce que** le noyau d'induit de vanne de fonctionnement d'urgence (53) présente l'au moins une liaison d'écoulement (73) sur sa surface d'enveloppe extérieure.
